# EUROPEAN PATENT SPECIFICATION

(11) **EP 3 822 140 B1**
(45) Date of publication and mention of the grant of the patent: **22.06.2022**
(21) Application number: 19209645.1
(22) Date of filing: 18.11.2019
(51) Int. Cl.: B60W 50/08, B60W 50/10, B60W 60/00

(54) **OPERATIONAL DESIGN DOMAIN VALIDATION COVERAGE FOR ROAD AND LANE TYPE**
VALIDIERUNGSABDECKUNG DER BETRIEBSENTWURFSDOMÄNE FÜR STRASSEN- UND FAHRSPURART
COUVERTURE DE VALIDATION DE DOMAINES DE CONCEPTION OPÉRATIONNELS POUR TYPE DE ROUTE ET DE VOIE

(43) Date of publication of application: 19.05.2021
(73) Proprietor: Zenuity AB, 417 56 Göteborg (SE)
(72) Inventor: JONSSON, Jonathan, 418 77 Göteborg (SE); WESTLUND, Mathias, 443 39 Lerum (SE)
(74) Representative: Zacco Sweden AB

(56) References cited:
- EP-A1- 2 915 718
- EP-A2- 3 552 911
- WO-A1-2019/122968
- WO-A1-2019/179717
- US-A1- 2017 329 330

## Description

### TECHNICAL FIELD

The present invention relates to autonomous driving (AD) and advanced driver-assistance systems (ADAS) for vehicles such as cars, buses, trucks and the like.

### BACKGROUND

Autonomous systems (AS) have the ability to act independently of direct human control and in unrehearsed conditions. These systems enables a whole range of applications, such as self-driving cars, humanoid robots and post-delivering drones. However, this increased capability and flexibility comes with a price: The difficulty in assessing reliability and safety of autonomous systems.

Traditional testing methods fall short of providing the desired standard levels, mainly due to the combinatorial explosion of possible situations to be analysed. There are strict requirements to ensure that AS are safe and reliable. The safety standards enforces the AS to operate without harmful states and the reliability requirement enforces the system to deliver services as specified. These requirements are generally associated with a low threshold of system failures, i.e. high probability of failure-free operation in a specified environment, which in turn require costly and time-consuming validation and verification of the AS.

Accordingly, the strict safety requirements that are imposed on autonomous driving (AD) systems translate into enormous validation requirements. Moreover, these strict safety requirements are put not only on the software components, but also on the decision and control components as well as the perception system of the vehicle (e.g. for accurately determining a position of the vehicle in the lane). High safety requirements on the perception system implies significant redundancy and expensive sensors and/or HD map functions.

Thus, there is need for new and improved methods and systems which mitigate the problems of presently known solutions, and in particular which for methods and system that enable for a transition from ADAS to AD in a less complex and more cost effective manner, than presently known solutions, while still fulfilling associated safety requirements.

WO 2019/179717 A1 discloses a controller (110). The controller (110) comprises input means (140) for receiving one or more state signals each indicative of one or more of a vehicle characteristic, a user characteristic and an environment characteristic. The controller (110) comprises output means (150) for outputting an availability signal indicative of an availability of an autonomous driving mode of a host vehicle. The controller (110) comprises control means (120) arranged to control the output means (150) to output the availability signal in dependence on the one or more state signals.

US 2017/329330 A1 discloses a vehicle control system including: an automated driving controller configured to execute one driving mode from out of a plurality of driving modes including an automated driving mode and a manual driving mode; a vehicle information collection section configured to collect information related to control history of one or both out of speed control and steering control performed based on operation by the occupant of the vehicle while the manual driving mode is being executed; and a driving characteristics derivation section configured to derive driving characteristics for each occupant of the vehicle based on information collected by the vehicle information collection section. The automated driving controller executes the automated driving mode by reflecting the driving characteristics for each occupant of the vehicle to the automated driving.

### SUMMARY

It is therefore an object of the present invention to provide a control system, a vehicle comprising such a control system, a method, and a computer-readable storage medium, which alleviate all or at least some of the drawbacks of presently known solutions.

More specifically, it is an object of the present invention to alleviate problems related to automated driving systems in terms of immense verification requirements and high hardware costs.

This object is achieved by means of a control system, a vehicle comprising such a control system, a method, and a computer-readable storage medium, as defined in the appended claims. The term exemplary is in the present context to be understood as serving as an instance, example or illustration.

According to a first aspect of the present invention, there is provided a control system for a vehicle traveling in a first direction on a road segment. The vehicle has a driver support function for autonomously manoeuvring the vehicle, and the driver support function is capable of operating within an operational design domain (ODD) including a road safety barrier metric and a road characteristics metric. The control system comprises control circuitry configured to obtain data comprising information about a surrounding environment of the vehicle. The information includes road safety barrier data and road characteristics data. Further, the control circuitry is configured to determine a fulfilment of the ODD based on the obtained data by determining a fulfilment of the road safety barrier metric and the road characteristics metric based on the road safety barrier data and the road characteristics data, respectively. Moreover, if the ODD is fulfilled, the control circuitry is configured to generate a first control signal in order to control an availability of the driver support function for the road segment so to make the driver support function available for an occupant of the vehicle. By means of the above presented control system, the strict integrity requirements can be moved to the ODD monitoring part of the system and thereby alleviate the requirements on other features of the driver support function, such as keep vehicle in lane features, which require significant amount of resources to verify and are associated with high-end, very costly, sensor equipment.

In more detail, the proposed control system enables for a system design where the integrity/reliability requirements are distributed in such a way that a driver support function in the form of a traffic jam pilot or highway pilot can be realized in a more cost effective way than previously known. More specifically, the integrity requirements on the driver support function's ability to stay in lane can be relaxed due to the reduced exposure to oncoming traffic, static objects and other high risk scenarios such as lane mergers is reduced.

According to the invention, the road safety barrier metric comprises a required number of road safety barriers, a required location of the road safety barrier(s) relative to the road segment, and at least one required type of road safety barriers. The obtained data comprises sensor data acquired by at least one sensing device arranged to monitor the surrounding environment of the vehicle, and wherein the control circuitry is configured to determine the fulfilment of the road safety barrier metric by determining a presence of a number of road safety barriers in the surrounding environment of the vehicle based on the obtained road safety barrier data, and if there is at least one road safety barrier in the surrounding environment of the vehicle: determining a location of the at least one road safety barrier relative to the road segment, and determining a type of the at least one road safety barrier. Moreover, the control circuitry is configured to determine that the road safety barrier metric is fulfilled if the required number of road safety barriers, the required location of the road safety barrier(s) relative to the road segment, and at least one required type of road safety barriers is fulfilled.

Moreover, according to another exemplary embodiment, the required number of road safety barriers is two, the required location of the road safety barriers is one road safety barrier on each side of the road segment extending along the first direction, and the required type is one of a flexible road safety barrier, rigid road safety barrier, or semi rigid road safety barrier. Thus, the road safety barrier metric may define that there should be a road safety barrier (traffic barrier) extending along both sides of the carriageway in order for the road safety barrier metric to be fulfilled.

According to a second aspect of the present invention, there is provided vehicle comprising a localization system for monitoring a geographical position of the vehicle, a perception system comprising at least one sensor for monitoring a surrounding environment of the vehicle, and a control system according to any one of the embodiments disclosed herein. With this aspect of the invention, similar advantages and preferred features are present as in the previously discussed first aspect of the invention.

According to a third aspect of the present invention, there is provided a method for controlling a driver support function for autonomously manoeuvring a vehicle traveling in a first direction on a road segment. The driver support function is capable of operating within an operational design domain (ODD) including a road safety barrier metric and a road characteristics metric. The method comprises obtaining data comprising information about a surrounding environment of the vehicle, where the information includes road safety barrier data and road characteristics data. The method further comprises determining a fulfilment of the ODD based on the obtained data by determining a fulfilment of the road safety barrier metric and the road characteristics metric based on the road safety barrier data and the road characteristics data, respectively. If the ODD is fulfilled, the method comprises generating a control signal in order to control an availability of the driver support function for the road segment in so to make the driver support function available for an occupant of the vehicle. With this aspect of the invention, similar advantages and preferred features are present as in the previously discussed first aspect of the invention.

According to a fourth aspect, there is provided a (non-transitory) computer-readable storage medium storing one or more programs configured to be executed by one or more processors of a vehicle control system, the one or more programs comprising instructions for performing the method according to any one of the embodiments disclosed herein. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Figs. 1a-1b are two schematic perspective view illustrations of a vehicle comprising a control system in accordance with an embodiment of the present invention.
Fig. 2 is a schematic chart illustrating a method for controlling a driver support function for autonomously manoeuvring a vehicle in accordance with an embodiment of the present invention.
Fig. 3 is a schematic flow chart representation of a method for controlling a driver support function for autonomously manoeuvring a vehicle in accordance with an embodiment of the present invention.
Fig. 4 is a schematic side view illustration of a vehicle comprising a control system in accordance with an embodiment of the present invention.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

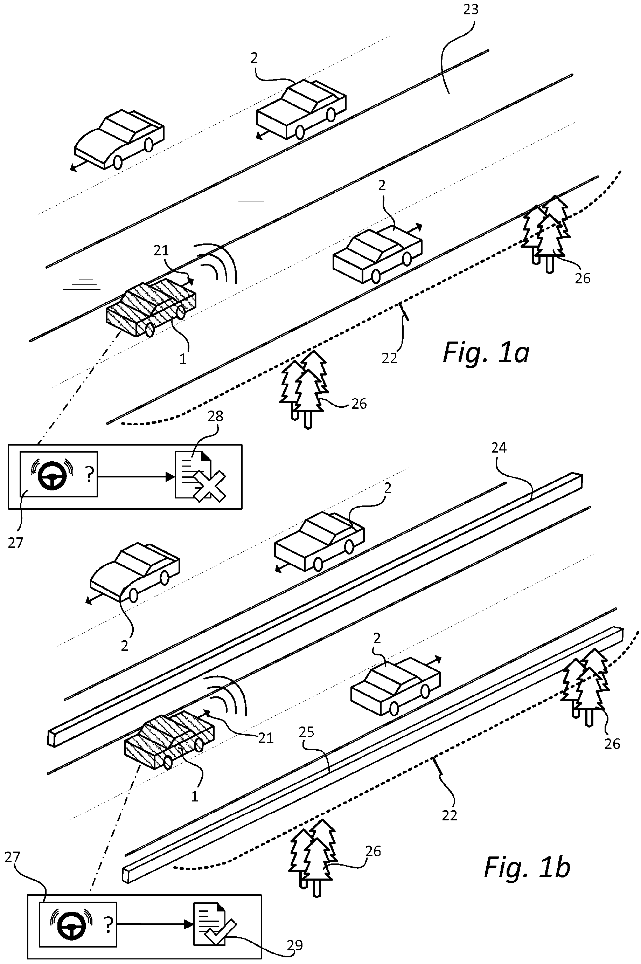

Fig. 1a and Fig. 1b are two schematic perspective view illustrations of a vehicle 1 comprising a control system for controlling a driver support function for autonomously manoeuvring the vehicle 1 in accordance with an embodiment of the present invention. More specifically, Figs. 1a-1b aim to elucidate an example of how the control system operates in two different scenarios while the vehicle 1 is traveling 21 on a road segment 22. The vehicle 1 is provided with a driver support function, which in the present context may be understood as an Autonomous Driving (AD) feature or an Automated Driving System (ADS) feature, and in reference to the latter it is preferably an ADS feature of level 3 or higher according to SAE J3016 levels of driving automation. The driver support function may for example be a "highway pilot" feature or a "traffic jam pilot" feature.

The present inventors noted that even if an autonomous or semi-autonomous vehicle 1 is traveling on a "highway-like" road, it doesn't necessarily imply that there is a physical separation in the form of a barrier towards oncoming traffic. Accordingly, if it cannot be proven or assumed that there is a barrier separating the vehicle 1 from oncoming traffic, it must be assumed that the exposure to oncoming traffic is high. High exposure to oncoming traffic puts high reliability/integrity requirements (e.g. ASIL D) on the driver support function's ability to stay within its own lane (ego-lane), which in turn will result in high reliability/integrity requirements on the corresponding sensors. These reliability/integrity requirements translate to immense verification requirements (verification of the driver support function) and use of high-end sensor devices and systems, which add significant costs in a very cost sensitive automotive industry.

It was then realized that instead of focusing on the driver support function and in particular its ability to stay in lane (which is a very costly and time consuming feature to develop and verify), one should instead focus on the risk exposure in order to reduce the overall risk assessment for collisions with oncoming traffic. In more detail, by moving the high integrity requirements to the monitoring of the coverage of the physical barrier separation to oncoming traffic, the risk exposure can be controlled to be at a sufficiently low level such that the requirements on the driver support function's ability to stay in its own lane can be relaxed by a corresponding amount.

Further, in the context of an Automotive Safety Integrity Level (ASIL) classification, there are three classification categories (Severity classification (S), Exposure classification (E), and Controllability classification (C)), which may be used when determining an ASIL requirement for a driver support feature. It should be noted that even though the following discussion is made in reference to ASIL classification, the invention is not limited thereto since the same logical reasoning can be applied to any other current or future risk classification scheme used in the context of specifying safety requirements of autonomous and semi-autonomous driving features for vehicles. Thus, the discussions related to the ASIL-levels and the corresponding classification categories (S, E, and C) are to be understood as examples serving to elucidate at least some advantages of the embodiments disclosed herein.

Thus, in a conventional case for driver support feature in the form of a highway pilot or traffic jam pilot, there is a high exposure level (E4) to oncoming traffic since the monitoring of the coverage of the physical risk barrier separation is not prioritized and it must therefore be assumed that there is no road safety barrier separating the carriage ways. Moreover, severity level is obviously high (S3) since the severity of the injuries caused by a hazardous event (head-on collision) are life-threatening to fatal, and it is difficult for a driver to prevent the injury wherefore the controllability is low (C3), i.e. the driver cannot do much to prevent the injury once a hazardous event occurs. Accordingly, the ASIL for the driver support features ability to stay within its own lane should be set to ASIL D, i.e. the vehicle system should not fail to stay within the lane more than once per 10⁹ hours of driving. Thus, in many cases the task of developing and offering autonomous driving features becomes an unfeasible task due to the immense requirements and costs associated thereto.

Therefore, by shifting the focus to the exposure levels, and more specifically shifting the high ASIL requirements to the monitoring (design time or run time) of the surrounding environment of the vehicle the ASIL requirement on the driver support feature's ability to stay in lane can be relaxed. In more detail, it was realized that it far less complicated to determine a presence of high risk environments such as environments without physical barrier separation to oncoming traffic, lane mergers, exists, lane additions etc., than to ensure that the vehicle is able to stay within its own lane at all times. Thus, by determining when the vehicle is and is not within a "high risk environment", and ensuring that the driver support feature is only available (for activation) when the vehicle is not within such a "high risk environment" the exposure to such an operational situation can be kept at a low level (e.g. E2). Consequently, the requirement for the driver support feature to stay within its lane can be relaxed (e.g. to ASIL B).

Accordingly, it can be said that in the conventional case the requirement for the driver support feature to keep the vehicle in its own lane was at ASIL D because a hazardous event (collision with oncoming traffic) is associated with high severity (S3), high exposure (E4), and low controllability (C3). By focusing the feature to only be available in environments fulfilling certain criteria (road safety barrier between the carriageways) the residual risk is split up into two cases, collision with barrier and collision with oncoming traffic. Collision with barrier may (for certain speeds) be associated with low severity (S1), high exposure (E4), and low controllability (C3) which translates into an ASIL B requirement for staying within lane. Collision with oncoming traffic may now instead be associated with high severity (S3), low exposure (E2), and low controllability (C3) which translates into an ASIL B requirement for staying within lane.

Analogous reasoning can be applied for physical separation at the shoulder of the road, i.e. without a road safety barrier at the shoulder there is a high exposure to the risk of collision with off road obstacles (trees or other static objects). Similarly as before, by moving the ASIL requirement to the monitoring of physical shoulder barriers, and only making the driver support function available on road sections with a sufficient likelihood (>99%) of having physical shoulder barriers, the requirement for the driver support feature to keep the vehicle within its own lane can be relaxed.

Further analogous reasoning is applicable for lane mergers, exits, lane additions, and other special high risk road segments on controlled access highways. As discussed in the foregoing, by only making the driver support function available on road segments without such road conditions, the (ASIL) requirements for avoiding collisions with other vehicles traveling on the same carriageway may be reduced since the exposure to such situations is controlled (reduced).

For example, lane mergers may be reduced with an ASIL B requirement on the driver support feature (e.g. highway pilot) for avoiding collisions with vehicles during a lane merge. More specifically, the ASIL B requirement may for example be derived from a high exposure to lane mergers (E4), low severity (S1) and low controllability (C3). However, by shifting the ASIL B requirement to the feature of only having the driver support function available on road segments or lanes without lane merges the resulting risk is then associated with a lower exposure level (e.g. E2) shifting the integrity requirement of the feature of avoiding collisions with vehicles during a lane merger to a quality manage (QM) level. Consequently, the verification task and sensor requirements related to the feature of avoiding collisions with vehicles during a lane merger are alleviated. It should be noted that the availability of the driver support function may be controlled on a lane-level, i.e. in some embodiments, the driver support function is available in lanes without lane merges. Thus, even if the general carriageway (comprising multiple lanes for traffic traveling in the same direction), as long as the ego-lane does not have any lane merges the driver support function may be available.

In more detail, the handling of lane merges with ASIL B integrity require significant side/rear sensing and associated verification. For a driver support feature such as a traffic jam pilot the ambition is to minimize the sensor costs wherefore an ASIL classified side/rear sensing is unwanted. Moreover, solving the lane merge scenario is a time critical situation that increases complexity and the verification is very costly. Thus, the inventors realized that it is a simpler task to confirm that the vehicle is traveling on a road segment or a lane with limited exposure to lane mergers, and since the integrity level of the collision avoidance with vehicles during lane merges can be reduced, the residual problem of "rare" lane merge situation may be addressed with existing side/rear sensing (e.g. corner radars and fish-eye cameras). An additional advantage (just as for the road barrier scenarios) is that the verification task is reduced as well.

In Fig. 1a the vehicle 1 (may also be referred to as the ego-vehicle) is traveling in a first direction 21 on a road segment 22, here in the form of a controlled-access highway (may also be referred to as a motorway, freeway or expressway). More specifically, the controlled-access highway is a dual carriage way where each carriage way having two lanes, and the road segment 22 is a portion of one of the carriage ways. The dual carriage way can be understood as a class of highway with two carriageways for traffic travelling in opposite directions separated by a median strip 23 (may also be referred to as a central reservation 23).

The driver support function of the vehicle 1 is capable of operating within a specific Operating Design Domain (ODD). An Operational design domain (ODD) is to be understood as a description of the operating domains in which an automated or a semi-automated driving system (i.e. ADS or ADAS) is designed to function, including, but not limited to, geographic, roadway (e.g. type, surface, geometry, edges and markings), environmental, connectivity, surrounding objects, and speed limitations. Thus, the ODD of the driver support function defines a set of requirements that must be fulfilled if the driver support function is to be able to operate.

The ODD includes a road safety barrier metric and a road characteristics metric that are to be fulfilled if the driver support system is to be able to operate within the ODD. However, in some embodiments the ODD includes at least one of a road safety barrier metric and a road characteristics metric (i.e. either one or both). The road safety barrier metric and the road characteristics metric are in the present context to be understood as parameters related to road safety barriers and roadway characteristics which are to be fulfilled or identified in the surrounding environment of the vehicle 1, in order to achieve ODD fulfilment.

The road safety barrier metric comprises a required number of road safety barriers 24, 25, a required location of the road safety barrier(s) 24, 25 relative to the road segment 22, and at least one required type of road safety barriers 24, 25. For example, in some embodiments the road safety barrier metric may dictate that there should be one concrete barrier 24, 25 on each side of the road segment 22 in the surrounding environment of the vehicle 1. In some embodiments, the road safety barrier metric may be that there is a road safety barrier 24 (arbitrary type) separating the two carriage ways. A road safety barrier are in the present context to be understood as traffic barriers (also known as guardrails, or crash barriers) which are designed to keep vehicles within their roadway and prevent them from colliding with dangerous obstacles such as boulders, sign supports, trees, bridge abutments, buildings, walls, and large storm drains, or from traversing steep (non-recoverable) slopes or entering deep water. They are also installed within medians 23 of divided highways to prevent errant vehicles from entering the opposing carriageway of traffic and help to reduce head-on collisions.

The road characteristics metric may comprise a presence of a controlled access highway without a lane merge to the right, a lane merge to the left, an exit ramp to the right, an exit ramp to the left, or a lane addition. In other words, a segment of a controlled access highway without any mergers, exists, lane additions, and so forth. Further, the road characteristic metric may comprise a presence of at least one lane (for traffic in the same direction) with identifiable (clear) lane markings.

In the illustrated example embodiment of Figs. 1a and 1b, the required number of road safety barriers 24, 25 is two, the required location of the road safety barriers 24, 25 is one road safety barrier 24, 25 on each side of the road segment 22 extending along the first direction 21, and the required type is one of a flexible road safety barrier, rigid road safety barrier, or semi rigid road safety barrier. Also, the required road type (defined by the road characteristics metric) is a controlled-access highway without a lane merge to the right, a lane merge to the left, an exit ramp to the right, an exit ramp to the left, or a lane addition. A flexible road safety barrier may for example be a wire rope supported between frangible post, a rigid road safety barrier may for example be made from concrete and do not deflect, and a semi-rigid road safety barrier may for example be made from steel beams or rails which are designed to deflect less than flexible barriers. Moreover, the driver support function is an ADS feature in the form of a highway pilot having an automation level 3 or higher according to SAE J3016 levels of driving automation.

The control system of the vehicle 1 comprises control circuitry configured to obtain data comprising information about the surrounding environment of the vehicle 1. Moreover, that information includes at least road safety barrier data and road characteristics data. More specifically, the obtained data may comprise sensor data acquired by at least one sensing device arranged to monitor the surrounding environment of the vehicle 1. The sensing device may be a part of a perception system of the vehicle 1. A perception system is in the present context to be understood as a system responsible for acquiring raw sensor data from on sensors such as cameras, LIDARs and RADARs, ultrasonic sensors, and converting this raw data into scene understanding. Naturally, the sensor data may be received directly from one or more suitable sensors (such as e.g. cameras, LIDAR sensors, radars, ultrasonic sensors, etc.). However, the obtained data may also comprise map data obtained from a HD Map module and/or localization data obtained from e.g. Global Navigation Satellite System (GNSS) module. The data may also originate from other vehicles' 2 perception systems and obtained by the ego-vehicle 1 via a Vehicle-to-Vehicle (V2V) communication protocol in order to increase the redundancy of the detection of various objects and parameters in the surrounding environment.

Further, the control circuitry is configured to determine a fulfilment of the ODD based on the obtained data by determining a fulfilment of the road safety barrier metric and the road characteristics metric based on the road safety barrier data and the road characteristics data. Lastly, if the ODD is fulfilled, the control circuitry is configured to generate a first control signal in order to control an availability of the driver support function for the road segment 22 in order to the make the driver support function available for an occupant of the vehicle.

In Fig. 1a the ego-vehicle 1 is, as mentioned, traveling on a controlled access highway with other vehicles 2 traveling on both carriage ways. There are no lane mergers, exists, or lane additions, however the controlled access highway has no road safety barriers. Thus, the road characteristics metric is fulfilled, but the road safety barrier metric is not fulfilled, wherefore the ODD for the driver support function is not fulfilled. Accordingly, in the scenario illustrated in Fig. 1a, the control circuitry of the control system of the vehicle is configured to control the availability 27 of the driver support function such that it is unavailable 28 for an occupant of the ego-vehicle. In other words, the occupant of the vehicle 1 cannot activate the highway pilot feature in the scenario illustrated in Fig. 1a.

In Fig. 1b the ego-vehicle is also traveling on a controlled access highway with other vehicles 2 traveling on both carriage ways. There are no lane mergers, exists, or lane additions, and there is a (rigid) concrete road safety barrier 24, 25 on both sides of the road segment 22 that the ego-vehicle is currently traveling on. Thus, the road characteristics metric and the road safety barrier metric are both fulfilled, wherefore the ODD for the driver support function is fulfilled. Therefore, the control circuitry of the control system of the vehicle is configured to control the availability 27 of the driver support function such that is available 29 for an occupant of the ego-vehicle 1. Stated differently, the occupant of the vehicle 1 is able to activate the highway pilot feature in the scenario illustrated in Fig. 1b.

In more detail, the obtained data may comprise sensor data acquired by at least one sensing device arranged to monitor the surrounding environment of the vehicle 1. Accordingly, the control circuitry may be configured to determine the fulfilment of the road safety barrier metric by determining a presence of a number of road safety barriers 24, 25 in the surrounding environment. Then, if there is at least one road safety barrier in the surrounding environment of the vehicle, determining a location and type of the one or more road safety barriers 24, 25. Now the "vehicle" 1 has a perception of the surrounding environment in terms of various road safety barrier parameters. Accordingly, the determination whether or not the road safety barrier metric is fulfilled can be based upon whether or not the required number of road safety barriers is fulfilled, the required location of the road safety barrier(s) relative to the road segment is fulfilled, and at least one required type of road safety barriers is fulfilled. These road safety barrier parameters may as mentioned be obtained from other information sources such as e.g. HD-map data, other vehicles' 2 perception systems, and so forth.

Similarly, the control circuitry is configured to determine a fulfilment road characteristics metric by determining a road type of the road segment 22 based on the obtained road characteristics data, and determining that the road characteristics metric is fulfilled if the determined road type corresponds to a controlled-access highway without a lane merge to the right, a lane merge to the left, an exit ramp to the right, an exit ramp to the left, or a lane addition. Just as for the road safety barrier parameters, the road characteristics data may be obtained from other information sources such as e.g. HD-map data, other vehicles' 2 perception systems, and so forth.

Obtaining road safety barrier data and road characteristics data from sources such as other vehicles' 2 perception systems and HD-map data is advantageous in order to estimate if the ODD will be fulfilled at an upcoming portion of the road segment (e.g. during the next 1000 meters, 2000 meters or 5000 meters).

Moreover, even though specific examples of a road safety barrier metric and road characteristics metric have been discussed. The skilled reader realizes that the exemplified parameters may be combined in other ways than those explicitly described. For example, the road characteristic metric may dictate that the ODD comprises a controlled access highway without an exit to the right, unless there is a road safety barrier on each side of the road segment. If there is a road safety barrier on each side of the road segment, then the ODD is fulfilled even if the vehicle is traveling on a controlled access high having an exit on the right. Moreover, the term road segment is to be interpreted broadly, and the driver support features may be capable of operating in different ODDs depending on which lane of the road segment the vehicle is in. For example, in some embodiments, the ODD may be fulfilled if ego-lane (i.e. the current lane of the vehicle) is the left-most lane of the carriageway and there is a road safety barrier to the left of the lane. Analogously, in some embodiments the ODD may be fulfilled if the ego-lane is the right-most lane of the carriageway and there is a road safety barrier to the right of the ego-lane.

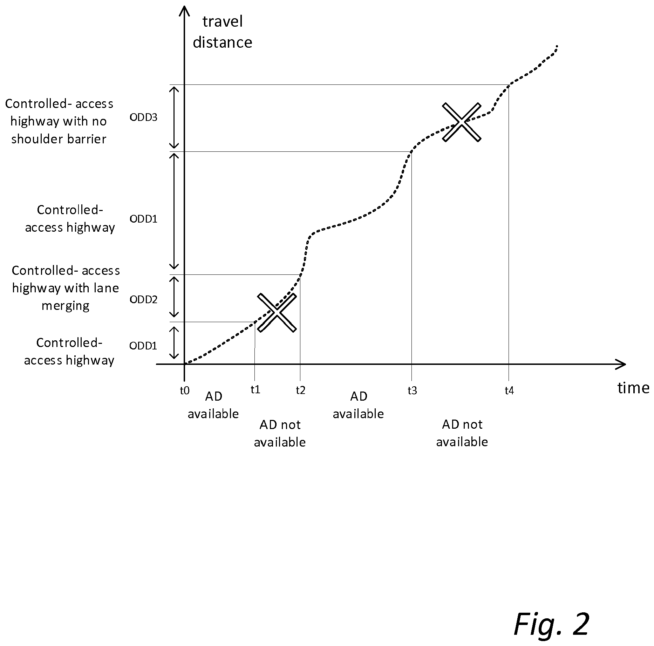

Fig. 2 is a schematic chart or graph illustrating a method for controlling a driver support function for autonomously manoeuvring a vehicle in accordance with an embodiment of the present invention. More specifically, the schematic chart of Fig. 2 serves to illustrate how the availability of the driver support function is controlled while the vehicle travels over a time period from t0 to t4. The vehicle has a driver support function for autonomously manoeuvring the vehicle, e.g. in the form of a highway pilot or traffic jam pilot. Moreover, the driver support function is capable of operating within an ODD including a road safety barrier metric and a road characteristics metric. The ODD (within which the driver support function is capable of operating) is denoted as ODD1 in the illustrated example and in the following discussion related thereto.

For the discussion related to Fig. 2 the same road safety barrier metric and road characteristic metric will be assumed. In other words, the required number of road safety barriers is two, the required location of the road safety barriers is one road safety barrier on each side of the road segment extending along the first direction, and the required type is one of a flexible road safety barrier, rigid road safety barrier, or semi rigid road safety barrier. Also, the required road type (defined by the road characteristics metric) is a controlled-access highway without a lane merge to the right, a lane merge to the left, an exit ramp to the right, an exit ramp to the left, or a lane addition.

For a first sub-period [t0, t1] of the time period [t0, t4] the vehicle is traveling on a first road segment of a controlled-access highway, and more specifically, the vehicle is traveling on a road segment that fulfils the ODD of the driver support function. Accordingly, a control signal is generated in order to control availability of the driver support function for the road segment that the vehicle is currently traveling on. More specifically, since the ODD is fulfilled the control signal is configured to make the driver support function available for an occupant of the vehicle. That a driver support function is available is to be interpreted as that the driver support function is available for activation so that the driver support function assumes control over the vehicle platform.

During a second sub-period [t1, t2] of the time period, the vehicle is traveling on a second road segment including a lane merger. Thus, the road characteristic metric is not fulfilled, wherefore the ODD of the driver support function is not fulfilled. Therefore a control signal is generated so to make the driver support function unavailable for an occupant of the vehicle while the vehicle is in an environment that does not fulfil the ODD of the driver support function.

Moreover, in some embodiments, a second control signal was generated during the first sub-period [t0, t1] in order to prepare a hand-over from the driver support function to the occupant of the vehicle and optionally issue a warning (e.g. via a Human-Machine Interface (HMI) of the vehicle) that the driver support function will be unavailable when the vehicle enters the upcoming road segment (i.e. the second road segment). The lane merger may for example be indicated from HD-map data or communicated from a preceding vehicle via a V2V communication protocol.

Moreover, in some embodiments, when the vehicle enters the second road segment, a third control signal is generated so to prompt the occupant of the vehicle execute a hand-over from the driver support function to the occupant of the vehicle. If the handover is confirmed by the occupant of the vehicle, a fourth control signal is generated so to execute the handover. However, if the handover is unconfirmed by the occupant of the vehicle, a fifth control signal may be generated in order to initiate a safety manoeuvre (e.g. perform a "DDT-Fall-back").

Further, while the vehicle is traveling on the second road segment, a second control signal may be generated in order to indicate an availability of the driver support function for the upcoming road segment (i.e. the road segment travelled upon between t2 and t3) to the occupant of the vehicle since road safety barrier data and the road characteristics data indicates that the ODD is fulfilled at the upcoming portion of the road segment. The road safety barrier data and the road characteristics data may for example be obtained from HD-map data or from a preceding vehicle via a V2V communication protocol.

Thus, when the vehicle enters the third road segment at time t2, a control signal is generated in order to make the driver support function available for an occupant of the vehicle. Analogously as in the foregoing discussion related to the second road segment [t1, t2], the fourth road segment [t3, t4] is associated with an environment that does not fulfil the ODD of the driver support feature since there is no shoulder barrier present.

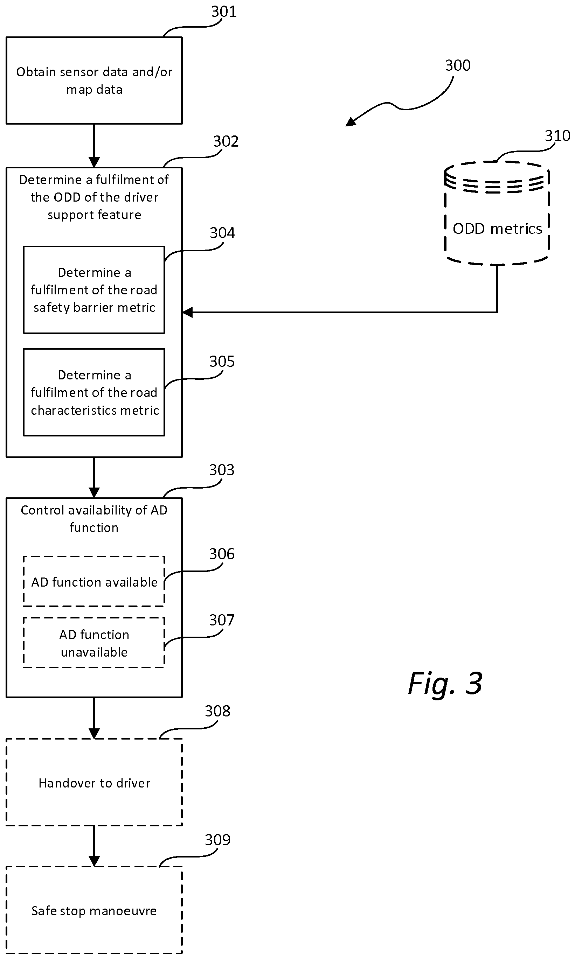

Fig. 3 is a schematic flow chart representation of a method 300 for controlling a driver support function for autonomously manoeuvring a vehicle traveling in a first direction on a road segment. Moreover, the vehicle has a driver support function for autonomously manoeuvring the vehicle, and the driver support function is capable of operating within an ODD. The ODD defining a road safety barrier metric and a road characteristics metric. That a driver support function is capable of operating within an ODD may in the present context be understood as that the driver support function is arranged to generate control signals in order to control an acceleration, deceleration, steering angle, activation of turning indicators, etc. of a vehicle while the vehicle is within an environment that fulfils the ODD of the driver support function. The ODD includes a road safety barrier metric and a road characteristics metric.

The method 300 comprises obtaining 301 data comprising information about a surrounding environment of the vehicle. The data may be sensor data generated by a perception system of the vehicle, map data (e.g. HD-map data), and/or sensor data generated by a perception system of another vehicle and communicated to the ego-vehicle. The sensor data comprises road safety barrier data and road characteristics data.

Further, the method 300 comprises determining 302 a fulfilment of the ODD based on the obtained data by determining 304 a fulfilment of the road safety barrier metric and determining 305 a fulfilment of the road characteristics metric based on the road safety barrier data and the road characteristics data, respectively. The determination of the fulfilment of a metric may for example be done by verifying the presence or absence of one or more conditions, parameters, or objects as defined by the metric by analysing the obtained 301 data. The one or more conditions, parameters or objects defined by the metric may for example be retrieved from a local or remote data repository 310.

Still further, the method 300 comprises generating a control signal in order to control 303 an availability of the driver support function for the road segment, the availability 306 or unavailability 307 of the driver support function being dependent on whether or not the ODD is fulfilled, as already exemplified in the foregoing.

The method 300 may further comprise generating control signals in order to initiate and execute 308 a handover to the driver if the vehicle is heading towards an environment where the ODD is not fulfilled. Moreover, the method 300 may comprise initiating and executing 309 a safety manoeuvre (e.g. perform DDT Fall-back such as for example a "safe stop" or "back-up stop") if the handover is not confirmed by a driver of the vehicle and the vehicle enters an environment where the ODD is not fulfilled.

Executable instructions for performing these functions are, optionally, included in a non-transitory computer-readable storage medium or other computer program product configured for execution by one or more processors.

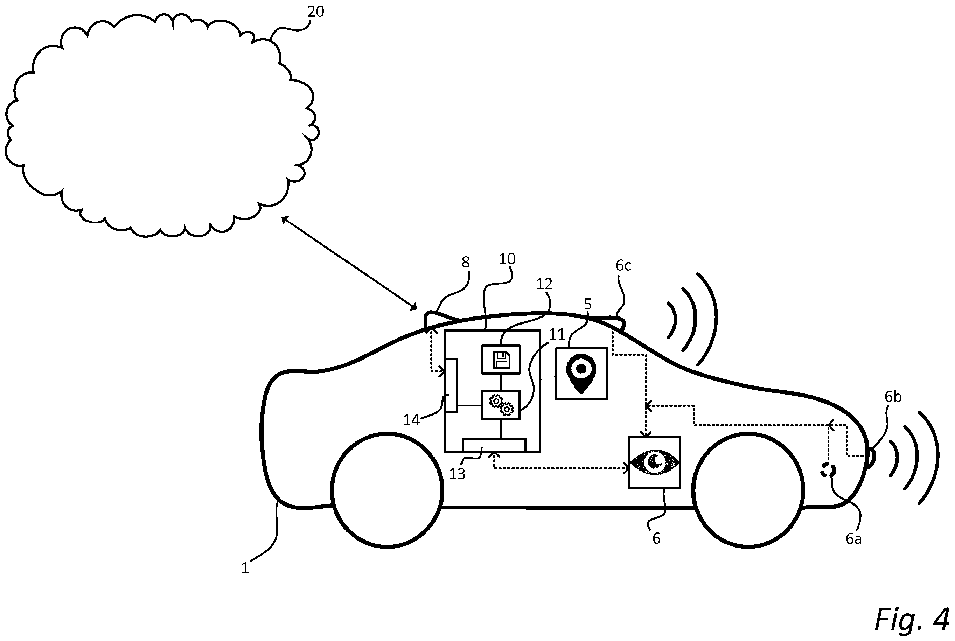

Fig. 4 is a schematic side view of a vehicle 1 comprising a control system 10 for a vehicle 1. The vehicle 1 has a driver support function for autonomously manoeuvring the vehicle when traveling on a road segment. In some embodiments the driver support function is an ADS function having an automation level 3 or higher according to SAE J3016 levels of driving automation (may also be referred to as an AD feature). The driver support function is capable of operating within a specific Operational Design Domain (ODD). The ODD includes a road safety barrier metric and a road characteristics metric.

The vehicle 1 further comprises a perception system 6 and a localization system 5. A perception system 6 is in the present context to be understood as a system responsible for acquiring raw sensor data from on sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy. The localization system may comprise or be associated with an HD-map module. An HD-map is in the present context to be understood as map comprising data with highly accurate and realistic representations of the road travelled upon by the vehicle 1. In more detail HD-maps may be understood as maps that are particularly built for autonomous driving purposes. These maps have an extremely high precision, oftentimes at a centimetre-level. Moreover, the maps generally contain information such as where the lanes are, where the road boundaries are, where the curves are, how high the curves are, and so forth.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for controlling a vehicle according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is further configured to obtain data from the perception system 6 and/or the localization system 5 of the vehicle 1. The data comprises information about a surrounding environment of the vehicle, and more specifically road safety barrier data and road characteristics data. The control circuitry 11 is further configured to determine a fulfilment of the ODD based on the obtained data. Moreover, if the ODD is fulfilled, the control circuitry 11 is configured to generate a first control signal in order to control an availability of the driver support function for the road segment so to make the driver support function available for an occupant of the vehicle while the vehicle is within an environment fulfilling the ODD.

Further, the vehicle 1 may be connected to external network(s) 20 via for instance a wireless link (e.g. for retrieving map data). The same or some other wireless link may be used to communicate with other vehicles 2 in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the invention as defined by the appended claims. Performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 13 may also provide the possibility to acquire sensor data directly or via dedicated sensor control circuitry 6 in the vehicle. The communication/antenna interface 14 may further provide the possibility to send output to a remote location (e.g. remote operator or control centre) by means of the antenna 8. Moreover, some sensors in the vehicle may communicate with the control device 10 using a local network setup, such as CAN bus, 12C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to determine if the ODD is fulfilled. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Moreover, even though the control systems and methods have been described in relation to a driver support feature capable of operating within an ODD including both a road safety barrier metric and a road characteristics metric. However, in some embodiments the driver support feature is capable of operating within an ODD including at least one of a road safety barrier metric and a road characteristics metric. Accordingly, the obtained data comprising information about a surrounding environment may comprise at least one of road safety barrier data and road characteristics data. For example if the ODD only has a road safety barrier metric then the obtained data comprises information including road safety barrier data. Analogously, if the ODD only has a road characteristics metric then the obtained data comprises information including road characteristics data. In these scenarios the fulfilment of the ODD may be based on the obtained data by determining a fulfilment of one or both of the road safety barrier metric and the road characteristics metric.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention as defined by the appended claims.

Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as defined by the appended claims be apparent for the person skilled in the art.

## Claims

1. A control system for a vehicle (1) traveling in a first direction (21) on a road segment (22), wherein the vehicle has a driver support function for autonomously manoeuvring the vehicle, wherein the driver support function is capable of operating within an operational design domain, ODD, including a road safety barrier metric and a road characteristics metric, wherein the control system comprises control circuitry (11) configured to:
obtain data comprising information about a surrounding environment of the vehicle, the information including road safety barrier data and road characteristics data;
determine a fulfilment of the ODD based on the obtained data by determining a fulfilment of the road safety barrier metric and the road characteristics metric based on the road safety barrier data and the road characteristics data, wherein the road safety barrier metric comprises a required number of road safety barriers (24, 25), a required location of the road safety barrier(s) relative to the road segment, and at least one required type of road safety barriers;
if the ODD is fulfilled, generate a first control signal in order to control an availability (27) of the driver support function for the road segment in order to make the driver support function available for an occupant of the vehicle.

2. The control system according to claim 1,
wherein the obtained data comprises sensor data acquired by at least one sensing device (6a, 6b, 6c) arranged to monitor the surrounding environment of the vehicle (1), and wherein the control circuitry (11) is configured to determine the fulfilment of the road safety barrier metric by:
determining a presence of a number of road safety barriers in the surrounding environment of the vehicle based on the obtained road safety barrier data; and
if there is at least one road safety barrier in the surrounding environment of the vehicle:
determining a location of the at least one road safety barrier relative to the road segment; and
determining a type of the at least one road safety barrier; and
determine that the road safety barrier metric is fulfilled if the required number of road safety barriers, the required location of the road safety barrier(s) relative to the road segment, and at least one required type of road safety barriers is fulfilled.

3. The control system according to claim 2, wherein the step of determining a type of the at least one road safety barrier (24, 25) comprises determining, for each road safety barrier of the at least one road safety barrier, if the road safety barrier is one of a flexible road safety barrier, rigid road safety barrier, or semi rigid road safety barrier.

4. The control system according to claim 2 or 3, wherein the required number of road safety barriers (24, 25) is two, the required location of the road safety barriers is one road safety barrier on each side of the road segment extending along the first direction, and the required type is one of a flexible road safety barrier, rigid road safety barrier, or semi rigid road safety barrier.

5. The control system according to any one of claims 2 - 4, wherein the road characteristics metric comprises a presence of a controlled-access highway without a lane merge to the right, a lane merge to the left, an exit ramp to the right, an exit ramp to the left, or a lane addition, and wherein the control circuitry is configured to determine a fulfilment road characteristics metric by:
determining a road type of the road segment based on the obtained road characteristics data; and
determining that the road characteristics metric is fulfilled if the determined road type corresponds to a controlled-access highway without a lane merge to the right, a lane merge to the left, an exit ramp to the right, an exit ramp to the left, or a lane addition.

6. The control system according to any one of the preceding claims, wherein the obtained data comprises map data and a geographical position of the vehicle.

7. The control system according to any one of the preceding claims, where in the control circuitry (11) is further configured to:
determine a fulfilment of the ODD for an upcoming portion of the road segment along the first direction by determining a fulfilment of the road safety barrier metric and the road characteristics metric for the upcoming portion of the road segment based on the road safety barrier data and the road characteristics data associated with the upcoming portion of the road segment;
generate a second control signal in order to:
prepare a hand-over from the driver support function to the occupant of the vehicle if the road safety barrier data and the road characteristics data indicates that the ODD is not fulfilled at the upcoming portion of the road segment; or
indicate an availability of the driver support function for the upcoming road segment to the occupant of the vehicle if the road safety barrier data and the road characteristics data indicates that the ODD is fulfilled at the upcoming portion of the road segment.

8. The control system according to claim 7, wherein the control circuitry (11) is further configured to:
when the vehicle enters the upcoming portion of the road segment, and the second control signal was generated in order to prepare the hand-over, generate a third control signal to prompt the occupant of the vehicle execute a hand-over from the driver support function to the occupant of the vehicle;
if the handover is confirmed by the occupant of the vehicle, generate a fourth control signal to execute the handover; or
if the handover is unconfirmed by the occupant of the vehicle, generate a fifth control signal to initiate a safety manoeuvre.

9. A vehicle (1) comprising:
a localization system (5) for monitoring a geographical position of the vehicle;
a perception system (6) comprising at least one sensor (6a, 6b, 6c) for monitoring a surrounding environment of the vehicle;
a control system according to any one of the preceding claims.

10. A method for controlling a driver support function for autonomously manoeuvring a vehicle (1) traveling in a first direction (21) on a road segment (22), wherein the driver support function is capable of operating within an operational design domain, ODD, including a road safety barrier metric and a road characteristics metric, the method comprising:
obtaining (301) data comprising information about a surrounding environment of the vehicle, the information including road safety barrier data and road characteristics data;
determining (302) a fulfilment of the ODD based on the obtained data by determining (304, 305) a fulfilment of the road safety barrier metric and the road characteristics metric based on the road safety barrier data and the road characteristics data, wherein the road safety barrier metric comprises a required number of road safety barriers (24, 25), a required location of the road safety barrier(s) relative to the road segment, and at least one required type of road safety barriers;
if the ODD is fulfilled, generating (303) a control signal in order to control an availability of the driver support function for the road segment in order to make the driver support function available for an occupant of the vehicle.

11. The method according to claim 10,
wherein the obtained data comprises sensor data acquired by at least one sensing device (6a, 6b, 6c) arranged to monitor the surrounding environment of the vehicle, and wherein the step of determining a fulfilment of the ODD comprises:
determining a presence of a number of road safety barriers in the surrounding environment of the vehicle based on the obtained road safety barrier data; and
if there is at least one road safety barrier in the surrounding environment of the vehicle:
determining a location of the at least one road safety barrier relative to the road segment; and
determining a type of the at least one road safety barrier; and
determine that the road safety barrier metric is fulfilled if the required number of road safety barriers, the required location of road safety barriers relative to the road segment, and at least one required type of road safety barriers are fulfilled.

12. The method according to claim 11, wherein the step of determining a type of the at least one road safety barrier comprises determining, for each road safety barrier of the at least one road safety barrier, if the road safety barrier is one of a flexible road safety barrier, rigid road safety barrier, or semi rigid road safety barrier.

13. The method according to any one of claims 10 - 12, further comprising:
determining a fulfilment of the ODD for an upcoming portion of the road segment along the first direction by determining a fulfilment of the road safety barrier metric and the road characteristics metric for the upcoming portion of the road segment based on the road safety barrier data and the road characteristics data associated with the upcoming portion of the road segment;
generating a second control signal in order to:
prepare a hand-over from the driver support function to the occupant of the vehicle if the road safety barrier data and the road characteristics data indicates that the ODD is not fulfilled at the upcoming portion of the road segment; or
indicate an availability of the driver support function for the upcoming road segment to the occupant of the vehicle if the road safety barrier data and the road characteristics data indicates that the ODD is fulfilled at the upcoming portion of the road segment.

14. The method according to claim 13, further comprising:
when the vehicle enters the upcoming portion of the road segment, and the second control signal was generated in order to prepare the hand-over, generating a third control signal to prompt the occupant of the vehicle execute a hand-over from the driver support function to the occupant of the vehicle;
if the handover is confirmed by the occupant of the vehicle, generating a fourth control signal to execute the handover; or
if the handover is unconfirmed by the occupant of the vehicle, generating a fifth control signal to initiate a safety manoeuvre.

15. A computer-readable storage medium storing one or more programs configured to be executed by one or more processors (11) of a vehicle control system (10), the one or more programs comprising instructions for performing the method according to any one of claims 10 -14.

## Patentansprüche

1. Steuersystem für ein Fahrzeug (1), das in einer ersten Richtung (21) auf einem Straßensegment (22) fährt, wobei das Fahrzeug eine Fahrerunterstützungsfunktion zum autonomen Manövrieren des Fahrzeugs aufweist, wobei die Fahrerunterstützungsfunktion in der Lage ist, innerhalb einer Operational Design Domain, ODD, einschließlich einer Straßensicherheitsbarrieremetrik und einer Straßeneigenschaftsmetrik zu arbeiten, wobei das Steuersystem eine Steuerschaltung (11) umfasst, die konfiguriert ist zum:
Erhalten von Daten, die Informationen über eine Umgebung des Fahrzeugs umfassen, welche Informationen Straßensicherheitsbarrieredaten und Stra-ßeneigenschaftsdaten enthalten;
Bestimmen einer Erfüllung der ODD basierend auf den erhaltenen Daten durch Bestimmen einer Erfüllung der Straßensicherheitsbarrieremetrik und der Straßeneigenschaftsmetrik basierend auf den Straßensicherheitsbarrieredaten und den Straßeneigenschaftsdaten, wobei die Straßensicherheitsbarrieremetrik eine erforderliche Anzahl von Straßensicherheitsbarrieren (24, 25), einen erforderlichen Ort der Straßensicherheitsbarriere(n) relativ zu dem Straßensegment und mindestens eine erforderliche Art von Straßensicherheitsbarrieren umfasst;
wenn die ODD erfüllt ist, Erzeugen eines ersten Steuersignals, um eine Verfügbarkeit (27) der Fahrerunterstützungsfunktion für das Straßensegment zu steuern, um die Fahrerunterstützungsfunktion für einen Insassen des Fahrzeugs zur Verfügung zu stellen.

2. Steuersystem nach Anspruch 1,
wobei die erhaltenen Daten Sensordaten umfassen, die durch mindestens eine Sensorvorrichtung (6a, 6b, 6c) erlangt werden, die angeordnet ist, um die Umgebung des Fahrzeugs (1) zu überwachen, und wobei die Steuerschaltung (11) konfiguriert ist, um die Erfüllung der Straßensicherheitsbarrieremetrik durch Folgendes zu bestimmen:
Bestimmen eines Vorhandenseins einer Anzahl von Straßensicherheitsbarrieren in der Umgebung des Fahrzeugs basierend auf den erhaltenen Straßensicherheitsbarrieredaten; und
wenn mindestens eine Straßensicherheitsbarriere in der Umgebung des Fahrzeugs vorhanden ist:
Bestimmen einer Position der mindestens einen Straßensicherheitsbarriere relativ zu dem Straßensegment; und
Bestimmen einer Art der mindestens einen Straßensicherheitsbarriere; und Bestimmen, dass die Straßensicherheitsbarrieremetrik erfüllt ist, wenn die erforderliche Anzahl von Straßensicherheitsbarrieren, der erforderliche Ort der Straßensicherheitsbarriere(n) relativ zu dem Straßensegment und mindestens eine erforderliche Art von Straßensicherheitsbarrieren erfüllt ist.

3. Steuersystem nach Anspruch 2, wobei der Schritt des Bestimmens einer Art der mindestens einen Straßensicherheitsbarriere (24, 25) das Bestimmen, für jede Straßensicherheitsbarriere der mindestens einen Straßensicherheitsbarriere, umfasst, ob die Straßensicherheitsbarriere eine von einer flexiblen Stra-ßensicherheitsbarriere, einer starren Straßensicherheitsbarriere oder einer halbstarren Straßensicherheitsbarriere ist.

4. Steuersystem nach Anspruch 2 oder 3, wobei die erforderliche Anzahl von Straßensicherheitsbarrieren (24, 25) zwei ist, der erforderliche Ort der Stra-ßensicherheitsbarrieren eine Straßensicherheitsbarriere auf jeder Seite des Straßensegments ist, die sich entlang der ersten Richtung erstreckt, und die erforderliche Art eine von einer flexiblen Straßensicherheitsbarriere, einer starren Straßensicherheitsbarriere oder einer halbstarren Straßensicherheitsbarriere ist.

5. Steuersystem nach einem der Ansprüche 2 bis 4, wobei die Straßeneigenschaftsmetrik ein Vorhandensein einer Autobahn ohne eine Fahrbahnzusammenführung nach rechts, eine Fahrbahnzusammenführung nach links, eine Ausfahrtsrampe nach rechts, eine Ausfahrtsrampe nach links oder eine Fahrbahnhinzufügung umfasst, und wobei die Steuerschaltung konfiguriert ist, um eine Erfüllung der Straßeneigenschaftsmetrik durch Folgendes zu bestimmen: Bestimmen einer Straßenart des Straßensegments basierend auf den erhaltenen Straßeneigenschaftsdaten; und
Bestimmen, dass die Straßeneigenschaftsmetrik erfüllt ist, wenn die bestimmte Straßenart einer Autobahn ohne eine Fahrbahnzusammenführung nach rechts, eine Fahrbahnzusammenführung nach links, eine Ausfahrtsrampe nach rechts, eine Ausfahrtsrampe nach links oder eine Fahrbahnhinzufügung entspricht.

6. Steuersystem nach einem der vorhergehenden Ansprüche, wobei die erhaltenen Daten Kartendaten und eine geografische Position des Fahrzeugs umfassen.

7. Steuersystem nach einem der vorhergehenden Ansprüche, wobei die Steuerschaltung (11) ferner konfiguriert ist zum:
Bestimmen einer Erfüllung der ODD für einen bevorstehenden Abschnitt des Straßensegments entlang der ersten Richtung durch Bestimmen einer Erfüllung der Straßensicherheitsbarrieremetrik und der Straßeneigenschaftsmetrik für den bevorstehenden Abschnitt des Straßensegments basierend auf den Straßensicherheitsbarrieredaten und den mit dem bevorstehenden Abschnitt des Straßensegments assoziierten Straßeneigenschaftsdaten;
Erzeugen eines zweiten Steuersignals zum:
Vorbereiten einer Übergabe von der Fahrerunterstützungsfunktion an den Insassen des Fahrzeugs, wenn die Straßensicherheitsbarrieredaten und die Straßeneigenschaftsdaten anzeigen, dass die ODD am bevorstehenden Abschnitt des Straßensegments nicht erfüllt ist; oder
Anzeigen einer Verfügbarkeit der Fahrerunterstützungsfunktion für das bevorstehende Straßensegment an den Insassen des Fahrzeugs, wenn die Stra-ßensicherheitsbarrieredaten und die Straßeneigenschaftsdaten angeben, dass die ODD am bevorstehenden Abschnitt des Straßensegments erfüllt ist.

8. Steuersystem nach Anspruch 7, wobei die Steuerschaltung (11) ferner konfiguriert ist zum:
wenn das Fahrzeug in den bevorstehenden Abschnitt des Straßensegments eintritt und das zweite Steuersignal erzeugt wurde, um die Übergabe vorzubereiten, Erzeugen eines dritten Steuersignals, um den Insassen des Fahrzeugs zu veranlassen, eine Übergabe von der Fahrerunterstützungsfunktion an den Insassen des Fahrzeugs auszuführen;
wenn die Übergabe durch den Insassen des Fahrzeugs bestätigt wird, Erzeugen eines vierten Steuersignals, um die Übergabe auszuführen; oder
wenn die Übergabe durch den Insassen des Fahrzeugs nicht bestätigt wird, Erzeugen eines fünften Steuersignals, um ein Sicherheitsmanöver einzuleiten.

9. Fahrzeug (1), umfassend:
ein Lokalisierungssystem (5) zum Überwachen einer geographischen Position des Fahrzeugs;
ein Wahrnehmungssystem (6), umfassend mindestens einen Sensor (6a, 6b,6c) zum Überwachen einer Umgebung des Fahrzeugs;
ein Steuersystem nach einem der vorhergehenden Ansprüche.

10. Verfahren zum Steuern einer Fahrerunterstützungsfunktion zum autonomen Manövrieren eines Fahrzeugs (1), das in einer ersten Richtung (21) auf einem Straßensegment (22) fährt, wobei die Fahrerunterstützungsfunktion in der Lage ist, innerhalb einer Operational Design Domain, ODD, einschließlich einer Straßensicherheitsbarrieremetrik und einer Straßeneigenschaftsmetrik zu arbeiten, wobei das Verfahren Folgendes umfasst:
Erhalten (301) von Daten, die Informationen über eine Umgebung des Fahrzeugs umfassen, welche Informationen Straßensicherheitsbarrieredaten und Straßeneigenschaftsdaten enthalten;
Bestimmen (302) einer Erfüllung der ODD basierend auf den erhaltenen Daten durch Bestimmen (304, 305) einer Erfüllung der Straßensicherheitsbarrieremetrik und der Straßeneigenschaftsmetrik basierend auf den Straßensicherheitsbarrieredaten und den Straßeneigenschaftsdaten, wobei die Straßensicherheitsbarrieremetrik eine erforderliche Anzahl von Straßensicherheitsbarrieren (24, 25), einen erforderlichen Ort der Straßensicherheitsbarriere(n) relativ zu dem Straßensegment und mindestens eine erforderliche Art von Straßensicherheitsbarrieren umfasst;
wenn die ODD erfüllt ist, Erzeugen (303) eines ersten Steuersignals, um eine Verfügbarkeit der Fahrerunterstützungsfunktion für das Straßensegment zu steuern, um die Fahrerunterstützungsfunktion für einen Insassen des Fahrzeugs zur Verfügung zu stellen.

11. Verfahren nach Anspruch 10,
wobei die erhaltenen Daten Sensordaten umfassen, die durch mindestens eine Sensorvorrichtung (6a, 6b, 6c) erlangt werden, die angeordnet ist, um die Umgebung des Fahrzeugs zu überwachen, und wobei der Schritt des Bestimmens einer Erfüllung der ODD Folgendes umfasst:
Bestimmen eines Vorhandenseins einer Anzahl von Straßensicherheitsbarrieren in der Umgebung des Fahrzeugs basierend auf den erhaltenen Straßensicherheitsbarrieredaten; und
wenn mindestens eine Straßensicherheitsbarriere in der Umgebung des Fahrzeugs vorhanden ist:
Bestimmen einer Position der mindestens einen Straßensicherheitsbarriere relativ zu dem Straßensegment; und
Bestimmen einer Art der mindestens einen Straßensicherheitsbarriere; und Bestimmen, dass die Straßensicherheitsbarrieremetrik erfüllt ist, wenn die erforderliche Anzahl von Straßensicherheitsbarrieren, der erforderliche Ort von Straßensicherheitsbarrieren relativ zu dem Straßensegment und mindestens eine erforderliche Art von Straßensicherheitsbarrieren erfüllt sind.

12. Verfahren nach Anspruch 11, wobei der Schritt des Bestimmens einer Art der mindestens einen Straßensicherheitsbarriere das Bestimmen, für jede Straßensicherheitsbarriere der mindestens einen Straßensicherheitsbarriere, umfasst, ob die Straßensicherheitsbarriere eine von einer flexiblen Straßensicherheitsbarriere, einer starren Straßensicherheitsbarriere oder einer halbstarren Straßensicherheitsbarriere ist.

13. Verfahren nach einem der Ansprüche 10 bis 12, ferner umfassend:
Bestimmen einer Erfüllung der ODD für einen bevorstehenden Abschnitt des Straßensegments entlang der ersten Richtung durch Bestimmen einer Erfüllung der Straßensicherheitsbarrieremetrik und der Straßeneigenschaftsmetrik für den bevorstehenden Abschnitt des Straßensegments basierend auf den Straßensicherheitsbarrieredaten und den mit dem bevorstehenden Abschnitt des Straßensegments assoziierten Straßeneigenschaftsdaten;
Erzeugen eines zweiten Steuersignals zum:
Vorbereiten einer Übergabe von der Fahrerunterstützungsfunktion an den Insassen des Fahrzeugs, wenn die Straßensicherheitsbarrieredaten und die Straßeneigenschaftsdaten anzeigen, dass die ODD am bevorstehenden Abschnitt des Straßensegments nicht erfüllt ist; oder
Anzeigen einer Verfügbarkeit der Fahrerunterstützungsfunktion für das bevorstehende Straßensegment an den Insassen des Fahrzeugs, wenn die Stra-ßensicherheitsbarrieredaten und die Straßeneigenschaftsdaten angeben, dass die ODD am bevorstehenden Abschnitt des Straßensegments erfüllt ist.

14. Verfahren nach Anspruch 13, ferner umfassend:
wenn das Fahrzeug in den bevorstehenden Abschnitt des Straßensegments eintritt und das zweite Steuersignal erzeugt wurde, um die Übergabe vorzubereiten, Erzeugen eines dritten Steuersignals, um den Insassen des Fahrzeugs zu veranlassen, eine Übergabe von der Fahrerunterstützungsfunktion an den Insassen des Fahrzeugs auszuführen;
wenn die Übergabe durch den Insassen des Fahrzeugs bestätigt wird, Erzeugen eines vierten Steuersignals, um die Übergabe auszuführen; oder
wenn die Übergabe durch den Insassen des Fahrzeugs nicht bestätigt wird, Erzeugen eines fünften Steuersignals, um ein Sicherheitsmanöver einzuleiten.

15. Computerlesbares Speichermittel, das ein oder mehrere Programme speichert, die konfiguriert sind, um von einem oder mehreren Prozessoren (11) eines Fahrzeugsteuersystems (10) ausgeführt zu werden, welches eine oder mehrere Programme Anweisungen zur Durchführung des Verfahrens nach einem der Ansprüche 10 bis 14 umfasst.

## Revendications

1. Système de commande pour un véhicule (1) se déplaçant dans une première direction (21) sur un segment de route (22), dans lequel le véhicule présente une fonction d'assistance au conducteur pour manœuvrer de manière autonome le véhicule, la fonction d'assistance au conducteur étant capable de fonctionner dans un domaine de conception opérationnelle, ODD, comprenant une métrique de barrière de sécurité routière et une métrique de caractéristiques routières, dans lequel le système de commande comprend un circuit de commande (11) configuré pour :
obtenir des données comprenant des informations sur un environnement ambiant du véhicule, les informations comprenant des données de barrière de sécurité routière et des données de caractéristiques routières ;
déterminer une réalisation de l'ODD sur la base des données obtenues en déterminant une réalisation de la métrique de barrière de sécurité routière et de la métrique de caractéristiques routières sur la base des données de barrière de sécurité routière et des données de caractéristiques routières, dans lequel la métrique de barrière de sécurité routière comprend un nombre requis de barrières de sécurité routière (24, 25), un emplacement requis de la ou des barrières de sécurité routière par rapport au segment de route, et au moins un type requis de barrières de sécurité routière ;
si l'ODD est réalisé, générer un premier signal de commande afin de commander une disponibilité (27) de la fonction d'assistance au conducteur pour le segment de route afin de rendre la fonction d'assistance au conducteur disponible pour un occupant du véhicule.

2. Système de commande selon la revendication 1,
dans lequel les données obtenues comprennent des données de capteur acquises par au moins un dispositif de détection (6a, 6b, 6c) agencé pour surveiller l'environnement ambiant du véhicule (1), et dans lequel le circuit de commande (11) est configuré pour déterminer la réalisation de la métrique de barrière de sécurité routière en :
déterminant la présence d'un certain nombre de barrières de sécurité routière dans l'environnement ambiant du véhicule sur la base des données de barrière de sécurité routière obtenues ; et
s'il y a au moins une barrière de sécurité routière dans l'environnement ambiant du véhicule :
déterminant un emplacement de l'au moins une barrière de sécurité routière par rapport au segment de route ; et
déterminant un type de l'au moins une barrière de sécurité routière ; et déterminant que la métrique de barrière de sécurité routière est réalisée si le nombre requis de barrières de sécurité routière, l'emplacement requis de la ou des barrières de sécurité routière par rapport au segment de route et au moins un type requis de barrières de sécurité routière sont réalisés.

3. Système de commande selon la revendication 2, dans lequel l'étape de détermination d'un type de l'au moins une barrière de sécurité routière (24, 25) comprend la détermination, pour chaque barrière de sécurité routière de l'au moins une barrière de sécurité routière, pour savoir si la barrière de sécurité routière est l'une d'une barrière de sécurité routière flexible, d'une barrière de sécurité routière rigide ou d'une barrière de sécurité routière semi-rigide.

4. Système de commande selon la revendication 2 ou 3, dans lequel le nombre requis de barrières de sécurité routière (24, 25) est deux, l'emplacement requis des barrières de sécurité routière est une barrière de sécurité routière de chaque côté du segment de route s'étendant le long de la première direction, et le type requis est l'une d'une barrière de sécurité routière flexible, d'une barrière de sécurité routière rigide ou d'une barrière de sécurité routière semi-rigide.

5. Système de commande selon l'une quelconque des revendications 2 à 4, dans lequel la métrique de caractéristiques routières comprend la présence d'une autoroute à accès contrôlé sans une fusion de voies à droite, une fusion de voies à gauche, une bretelle de sortie à droite, une bretelle de sortie vers la gauche, ou un ajout de voie, et dans lequel le circuit de commande est configuré pour déterminer un réalisation d'une métrique de caractéristiques routières en :
déterminant un type de route du segment de route sur la base des données de caractéristiques routières obtenues ; et
déterminant que la métrique de caractéristiques routières est réalisée si le type de route déterminé correspond à une autoroute à accès contrôlé sans une fusion de voies à droite, une fusion de voies à gauche, une bretelle de sortie à droite, une bretelle de sortie à gauche, ou un ajout de voie.

6. Système de commande selon l'une quelconque des revendications précédentes, dans lequel les données obtenues comprennent des données cartographiques et une position géographique du véhicule.

7. Système de commande selon l'une quelconque des revendications précédentes, dans lequel le circuit de commande (11) est en outre configuré pour :
déterminer une réalisation de l'ODD pour une portion à venir du segment de route le long de la première direction en déterminant une réalisation de la métrique de barrière de sécurité routière et de la métrique de caractéristiques routières pour la portion à venir du segment de route sur la base des données de barrière de sécurité routière et des données de caractéristiques routières associées à la portion à venir du segment de route ;
générer un deuxième signal de commande afin de :
préparer un transfert de la fonction d'assistance au conducteur à l'occupant du véhicule si les données de barrière de sécurité routière et les données de caractéristiques routières indiquent que l'ODD n'est pas réalisé au niveau de la portion à venir du segment de route ; ou
indiquer une disponibilité de la fonction d'assistance au conducteur pour le segment de route à venir à l'occupant du véhicule si les données de barrière de sécurité routière et les données de caractéristiques routières indiquent que l'ODD est réalisé au niveau de la portion à venir du segment de route.

8. Système de commande selon la revendication 7, dans lequel le circuit de commande (11) est en outre configuré pour :
lorsque le véhicule entre dans la portion à venir du segment de route, et que le deuxième signal de commande a été généré afin de préparer le transfert,
générer un troisième signal de commande pour inviter l'occupant du véhicule à exécuter un transfert à partir de la fonction d'assistance au conducteur à l'occupant du véhicule ;
si le transfert est confirmé par l'occupant du véhicule, générer un quatrième signal de commande pour exécuter le transfert ; ou
si le transfert n'est pas confirmée par l'occupant du véhicule, générer un cinquième signal de commande pour lancer une manœuvre de sécurité.

9. Véhicule (1) comprenant :
un système de localisation (5) pour surveiller une position géographique du véhicule ;
un système de perception (6) comprenant au moins un capteur (6a, 6b, 6c) pour surveiller un environnement ambiant du véhicule ;
un système de commande selon l'une quelconque des revendications précédentes.

10. Procédé de commande d'une fonction d'assistance au conducteur pour manœuvrer de manière autonome un véhicule (1) se déplaçant dans une première direction (21) sur un segment de route (22), la fonction d'assistance au conducteur étant capable de fonctionner dans un domaine de conception opérationnelle, ODD, comprenant une métrique de barrière de sécurité routière et une métrique de caractéristiques routières, le procédé comprenant les étapes consistant à :
obtenir (301) des données comprenant des informations sur un environnement ambiant du véhicule, les informations comprenant des données de barrière de sécurité routière et des données de caractéristiques routières ;
déterminer (302) une réalisation de l'ODD sur la base des données obtenues en déterminant (304, 305) une réalisation de la métrique de barrière de sécurité routière et de la métrique de caractéristiques routières sur la base des données de barrière de sécurité routière et des données de caractéristiques routières, dans lequel la métrique de barrière de sécurité routière comprend un nombre requis de barrières de sécurité routière (24, 25), un emplacement requis de la ou des barrières de sécurité routière par rapport au segment de route, et au moins un type requis de barrières de sécurité routière ;
si l'ODD est satisfait, générer (303) un premier signal de commande afin de commander une disponibilité de la fonction d'assistance au conducteur pour le segment de route afin de rendre la fonction d'assistance au conducteur disponible pour un occupant du véhicule.

11. Procédé selon la revendication 10,
dans lequel les données obtenues comprennent des données de capteur acquises par au moins un dispositif de détection (6a, 6b, 6c) agencé pour surveiller l'environnement ambiant du véhicule, et dans lequel l'étape de détermination d'une réalisation de l'ODD comprend :
déterminant la présence d'un certain nombre de barrières de sécurité routière dans l'environnement ambiant du véhicule sur la base des données de barrière de sécurité routière obtenues ; et
s'il y a au moins une barrière de sécurité routière dans l'environnement ambiant du véhicule :
déterminant un emplacement de l'au moins une barrière de sécurité routière par rapport au segment de route ; et
déterminant un type de l'au moins une barrière de sécurité routière ; et déterminant que la métrique de barrière de sécurité routière est réalisée si le nombre requis de barrières de sécurité routière, l'emplacement requis de la ou des barrières de sécurité routière par rapport au segment de route et au moins un type requis de barrières de sécurité routière sont réalisés.

12. Procédé selon la revendication 11, dans lequel l'étape de détermination d'un type de l'au moins une barrière de sécurité routière comprend la détermination, pour chaque barrière de sécurité routière de l'au moins une barrière de sécurité routière, pour savoir si la barrière de sécurité routière est l'une d'une barrière de sécurité routière flexible, d'une barrière de sécurité routière rigide ou d'une barrière de sécurité routière semi-rigide.

13. Procédé selon l'une quelconque des revendications 10 à 12, comprenant en outre les étapes consistant à :
déterminer une réalisation de l'ODD pour une portion à venir du segment de route le long de la première direction en déterminant une réalisation de la métrique de barrière de sécurité routière et de la métrique de caractéristiques routières pour la portion à venir du segment de route sur la base des données de barrière de sécurité routière et des données de caractéristiques routières associées à la portion à venir du segment de route ;
générer un deuxième signal de commande afin de :
préparer un transfert de la fonction d'assistance au conducteur à l'occupant du véhicule si les données de barrière de sécurité routière et les données de caractéristiques routières indiquent que l'ODD n'est pas réalisé au niveau de la portion à venir du segment de route ; ou
indiquer une disponibilité de la fonction d'assistance au conducteur pour le segment de route à venir à l'occupant du véhicule si les données de barrière de sécurité routière et les données de caractéristiques routières indiquent que l'ODD est réalisé au niveau de la portion à venir du segment de route.

14. Procédé selon la revendication 13, comprenant en outre les étapes consistant à :
lorsque le véhicule entre dans la portion à venir du segment de route, et que le deuxième signal de commande a été généré afin de préparer le transfert, générer un troisième signal de commande pour inviter l'occupant du véhicule à exécuter un transfert à partir de la fonction d'assistance au conducteur à l'occupant du véhicule ;
si le transfert est confirmé par l'occupant du véhicule, générer un quatrième signal de commande pour exécuter le transfert ; ou
si le transfert n'est pas confirmée par l'occupant du véhicule, générer un cinquième signal de commande pour lancer une manoeuvre de sécurité.

15. Support de stockage lisible par ordinateur, stockant un ou plusieurs programmes configurés pour être exécutés par un ou plusieurs processeurs (11) d'un système de commande pour un véhicule (10), le ou les programmes comprenant des instructions pour exécuter le procédé selon l'une quelconque des revendications 10 à 14.
